# EUROPÄISCHE PATENTANMELDUNG

(11) **EP 0 717 282 A2**
(43) Veröffentlichungstag der Anmeldung: **19.06.1996**
(21) Anmeldenummer: 95119003.2
(22) Anmeldetag: 02.12.1995
(51) Int. Cl.: G01N 33/00, G01N 27/12, G01N 27/00

(54) **Anordnung zur Ermittlung von Fremdstoffanteilen in einem Gasstrom**

(30) Priorität: 17.12.1994 DE 4445102
(71) Anmelder: FILTERWERK MANN & HUMMEL GmbH, D-71638 Ludwigsburg (DE)
(72) Erfinder: Megerle, Walter, D-75181 Pforzheim (DE); Mössinger, Klaus, D-74182 Obersulm (DE); Tritt, Gerhard, D-72218 Effringen (DE)
(74) Vertreter: Aldag, Wolfgang, Dipl.-Ing.

(57) **Zusammenfassung**

Die Erfindung betrifft eine Anordnung zur Ermittlung von Fremdstoffanteilen in einem Gasstrom, mit mindestens einem Meßfühler (3) zur Entnahme einer vorgebbaren Gasmenge. Es ist mindestens ein Sensor (6) in einem Meßfühler (3) vorhanden, an dem die entnommene Gasmenge vorbeiführbar ist. Zur optimalen Auswertung und zur Signalisierung bestimmter Betriebszustände weist der Sensor (6) einen Temperaturfühler (7) zur Bestimmung der Temperatur (T) der vorbeiströmenden Gasmenge und einen Detektor (8) auf, dessen elektrische Leitfähigkeit von der Art und der Dichte der Fremdstoffe (z.B. Öl) in der Gasmenge abhängig ist. Das entsprechende Meßsignal wird in einer elektronischen Auswerteeinheit (9) weiterverarbeitet.

## Beschreibung

Die Erfindung betrifft eine Anordnung zur Ermittlung von Fremdstoffanteilen in einem Gasstrom nach dem Oberbegriff des Hauptanspruchs.

### Stand der Technik

Es ist bereits eine Anordnung zur Ermittlung von Fremdstoffanteilen in einem Gasstrom bekannt (EP 0 512 238 A1), bei der zur Bestimmung, insbesondere des Anteils von organischem Kohlenstoff im Gas eine vorgegebene Gasmenge einem Sensor zugeführt wird. Diese Gasprobe wird über einen thermischen Reaktor geführt und dann zur Bestimmung der Konzentration des Kohlenstoffs von einem modulierten infraroten Lichtstrahl durchdrungen. Der Aufbau dieser bekannten Anordnung sowie das Meßverfahren, das noch eine zusätzliche Messung mit einem Vergleichsgas erforderlich macht, ist hier relativ aufwendig und erfordert eine komplizierte Auswertung.

In vielen Anwendungsfällen bei denen ein Gas- bzw. Luftstrom zur Funktion der Aggregate notwendig ist, wie beispielsweise in pneumatischen Systemen, besteht die Gefahr, daß Öl- oder Schmutzpartikel mitgenommen werden und die Funktion des Aggregats negativ beeinflussen. Insbesondere bei erhöhtem Restölgehalt in Druckluft, aufgrund beschädigter Systemteile in einem pneumatischen System, können nachgeschaltete druckluftbetriebene Geräte ebenfalls in Mitleidenschaft gezogen werden.

Wenn solche Verschmutzungen nicht rechtzeitig erkannt und behoben werden, muß eventuell das gesamte Druckluftversorgungsnetz inclusive seiner angeschalteten Geräte einer aufwendigen und teuren Reinigung unterzogen werden. Außerdem werden die Betriebszeiten von Filtern für die Druckluftaufbereitung hierdurch stark verkürzt und insgesamt erfolgt eine Beeinträchtigung der Betriebssicherheit.

Der Erfindung liegt die Aufgabe zugrunde, eine Anordnung zur Ermittlung von Fremdstoffanteilen in einem Gasstrom mit den Merkmalen des Oberbegriffs des Hauptanspruchs so fortzubilden, daß bei einem flexiblen Aufbau eine genaue Messung und einfache Auswertung gewährleistet ist.

### Vorteile der Erfindung

Die erfindungsgemäße Anordnung löst die gestellte Aufgabe mit den im Kennzeichen des Hauptanspruchs angegebenen Merkmalen.

Um Beeinträchtigungen der Betriebssicherheit von beispielsweise pneumatischen Systemen auszuschließen, ist es vorteilhaft mit einem Erfassungs- und Warnsystem für Verunreinigungen, die Fremdstoffanteile, insbesondere Ölverschmutzungen, im Luftstrom zu detektieren. Bei sogenannten Restölindikatoren wird daher insbesondere ein Maß für die Menge von Ölpartikel im Luftstrom ermittelt und weiterverarbeitet.

In vorteilhafter Weise enthält die erfindungsgemäße Anordnung einen Sensor, dessen elektrische Leitfähigkeit sich in Abhängigkeit vom Ölgehalt des Gasstromes ändert. Zusätzlich wird die Temperatur des Gasstromes mit einem Temperaturfühler erfaßt, da diese einen Einfluß auf des Meßergebnis hat.

Besonders vorteilhaft ist es, wenn gemäß Anspruch 2 die für die Messung erforderliche Gasmenge in verschiedenen Zonen des Gasstroms über Meßfühler vorgenommen wird, da sich beispielsweise im unteren Wandbereich eines Rohrleitungssystems aufgrund der Schwerkraft eine höhere Verschmutzungsdichte einstellt als im oberen Bereich. Mit den im Anspruch 3 angegebenen Grenzen für die Temperatur des Gasstromes von ca. 50 °C ist sichergestellt, daß das Meßergebnis nicht durch im Luftstrom mitgeführte Kohlenwassertröpfchen verfälscht wird.

Eine vorteilhafte Ansaugung der für die Messung erforderlichen Gasmenge ist mit einer Anordnung nach Anspruch 4 erreichbar, bei der durch den an der Öffnung des Meßfühlers entstehenden Unterdruck sich ein im Verhältnis zum Hauptgasstrom relativ langsamer Gasstrom in der Meßkammer einstellt. Die erforderlichen Reaktionen der Sensoren, die gemäß der Unteransprüche 6 bis 8 entweder Halbleitergassensoren, Zinnoxydgassensoren, Quarzsensoren oder Piezokeramiksensoren sein können, führen so mit größerer Sicherheit zu einem auswertbaren Meßergebnis.

Mit den Unteransprüchen 9 und 10 sind Weiterbildungen der erfindungsgemäßen Anordnung angegeben, die auf einfache Weise eine Anzeige von Grenzwertüberschreitungen möglich machen und bei der insbesondere unter Einsatz eines Mikrocontrollers die entstehenden Meßwerte konditioniert, weiterverarbeitet und an eine elektronische Schnittstelle, beispielsweise zu einem Regelgerät, übergeben werden. Die Verwendung eines Mikrocontrollers erlaubt hier in Zusammenhang mit einer sich selbst parametrierenden Software eine maximale Anpassungsfähigkeit an verschiedene Betriebszustände und Anlagentypen.

Besonders vorteilhaft ist es, wenn nach Unteranspruch 11 die Erfassung der Fremdstoffanteile im Gasstrom in verschiedenen Betriebszuständen vorgenommen wird.

### Zeichnung

Ein Ausführungsbeispiel der erfindungsgemäßen Anordnung wird anhand der Zeichnung erläutert. Es zeigen:
Figur 1 eine Schnittdarstellung durch ein druckluftförderndes Rohrsystem mit einem Sensormodul und einer Auswerteeinheit und
Figur 2 eine Darstellung von verschiedenen Meßphasen.

### Beschreibung des Ausführungsbeispiels

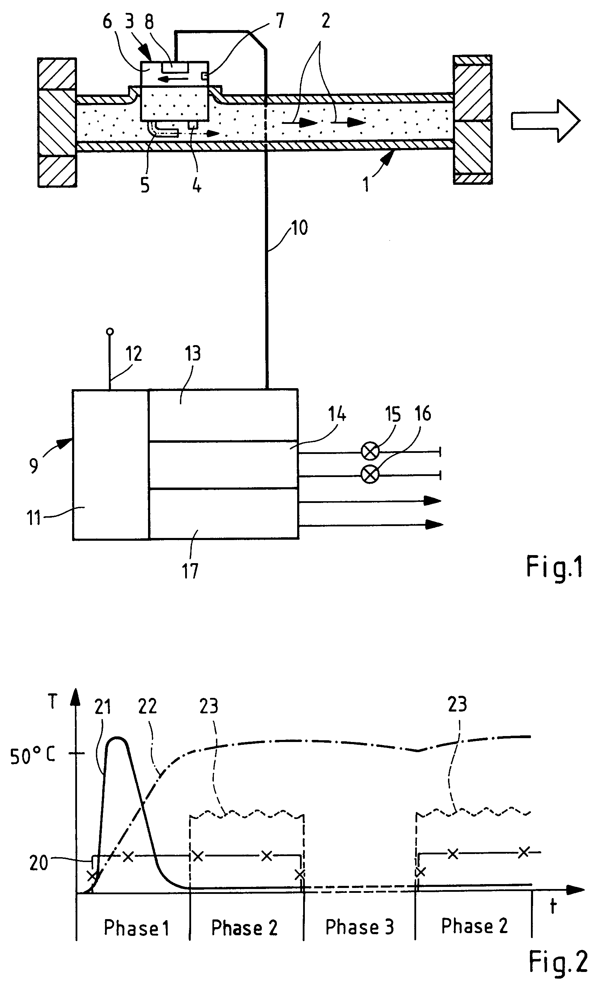

In Figur 1 ist ein Ausschnitt aus einem Rohrsystem 1 eines Druckluftversorgungsnetzes dargestellt, das im Inneren den durch Pfeile 2 gekennzeichneten Druckluftstrom (Gasstrom) führt. Ein Meßfühler 3 ist an einer vorgegebenen Stelle in das Rohrsystem 1 eingebracht, beispielsweise über eine Schraubverbindung. Der Meßfühler 3 weist einen Einlaß 4 und einen Auslaß 5 für eine bestimmte Gasmenge auf, die aufgrund des Unterdrucks am Auslaß 5 im Gasstrom 2 in den Meßfühler 3 eingesaugt wird.

Die für die Messung erforderliche Gasmenge wird beim dargestellten Ausführungsbeispiel im unteren Rohrbereich entnommen, da hier aufgrund der Schwerkraft die höchste Konzentration an den zu erfassenden Fremdstoffen erwartet wird. Es ist aber auch eine Anordnung in anderen Rohrbereichen denkbar, bzw. ist eine Kombination von mehreren Meßfühlern 3 zur Erhöhung der Meßgenauigkeit möglich.

Im oberen Bereich des Meßfühlers 3 ist ein Sensor 6 angeordnet, der einen Temperaturfühler 7 und einen Detektor 8 für die Fremdstofferfassung enthält. Während des Vorbeiströmens der Gasmenge am Detektor 8 ändert sich aufgrund der elektrischen Eigenschaften des Detektors 8 die Leitfähigkeit des Detektormaterials in Abhängigkeit von der chemischen Zusammensetzung der Gasmenge. Als Detektoren können hier handelsübliche Halbleiterdetektoren eingesetzt werden, die eine Widerstandsänderung zwischen mindestens zwei Anschlußpolen erfahren, wenn beispielsweise eine ölhaltige Gasmenge an der Oberfläche vorbeiströmt. Unter Berücksichtigung des Ausgangssignals des Temperaturfühlers 7 kann das durch die Widerstandsänderung gewonnene elektrische Signal in einer Auswerteeinheit 9 verarbeitet werden.

Auch eine Anwendung von Quarz- oder Piezokeramiksensoren kommt in Betracht, wobei diese Bestandteil eines elektrischen Schwingkreises sind, der in Abhängigkeit vom Fremdstoffanteil verstimmt wird, bzw. dessen Güte in Abhängigkeit vom Fremdstoffanteil variiert.

Eine Verbindung des Meßfühlers 3 mit der in der Regel an einer zentralen Stelle angeordneten Auswerteeinheit 9 wird über eine Signalleitung 10 hergestellt. Die Auswerteeinheit 9 enthält eine Stromversorgung 11, die in hier nicht explizit dargestellter Weise mit einer Versorgungsspannung versehen ist. Über eine Signalleitung 12 wird der Auswerteeinheit 9 der Einschaltzustand des für die Drucklufterzeugung zuständigen Kompressors übermittelt.

Weiterhin enthält die Auswerteeinheit ein Interface 13 für die Aufbereitung des Ausgangssignals des Meßwertfühlers 3 zur Weiterleitung an einen Mikroprozessor 14. An Ausgängen des Mikroprozessors 14 können beispielsweise Signaleinrichtungen 15 und 16 angeschlossen werden, die z. B. ein Überschreiten von verschiedenen Meßwertergebnissen signalisieren. Somit kann bei einer ersten Grenzwertüberschreitung ein Warnsignal, beispielsweise ein Hinweis auf den notwendigen Austausch eines Filters, und bei einer zweiten Grenzwertüberschreitung ein Abschaltsignal abgegeben werden. Über eine Schnittstelle 17 können hierbei auch direkte Steuersignale für Steuer- oder Regeleinrichtungen, die das Druckluftversorgungsnetz beeinflussen, erzeugt werden.

In Figur 2 ist der Verlauf verschiedener Zustands- und Meßgrößen beim vorher beschriebenen Ausführungsbeispiel über der Zeit t dargestellt. Mit einer Linie 20 soll der Einschaltzustand des Druckluftkompressors, der im Anfangsbereich der Phase 1 startet, gezeigt werden. Nach dem Start des Druckluftkompressors macht sich zunächst der Wassergehalt bzw. die Luftfeuchtigkeit der Druckluft, gemäß einer Linie 21, stark bemerkbar. Die Temperatur T der Druckluft steigt nach einer Linie 22 bis zu einem Wert von 50°C an und startet damit die Phase 2. Innerhalb dieser Phase 2 wird der Fremdstoffanteil (hier Restöl) in der Gasmenge im Meßfühler 3, wie mit einer Linie 23 dargestellt, ermittelt. Diese Meßwerte sind hierbei über der Zeit t integriert. In der Phase 3 schließt sich eine Kompressorruhepause mit einem geringem Absinken der Temperatur an. Bei wieder eingeschaltetem Kompressor in der folgenden Phase 2 überschreitet die Temperatur T erneut den Wert von 50°C und es kann ein neuer Meßzyklus, wie vorher beschrieben, beginnen.

## Patentansprüche

1. Anordnung zur Ermittlung von Fremdstoffanteilen in einem Gasstrom, mit
- mindestens einem Meßfühler (3) zur Entnahme einer vorgebbaren Gasmenge aus dem Gasstrom (2) und mit
- mindestens einem Sensor (6) in einer Meßkammer des Meßfühlers (3) an dem die entnommene Gasmenge vorbeiführbar ist,
**dadurch gekennzeichnet, daß**
- der Sensor (6) einen Temperaturfühler (7) zur Bestimmung der Temperatur (T) der vorbeiströmenden Gasmenge und einen Detektor (8) enthält, dessen elektrische Eigenschaften von der Art und der Dichte der Fremdstoffe in der Gasmenge abhängig ist und daß
- in einer elektronischen Auswerteeinheit (9) die Ausgangssignale des Detektors (8) in Abhängigkeit von der Temperatur (T) und einer vorgegebenen Eichkurve weiterverarbeitet werden.

2. Anordnung nach Anspruch 1,
**dadurch gekennzeichnet, daß**
- sich mindestens zwei Meßfühler (3) in einem, den Gasstrom führenden Rohrsystem (1) befinden, von denen ein erster Meßfühler (3) mit seinem Einlaß (4) in den mittleren Bereich des Gasstromes und ein zweiter Meßfühler (3) mit seinem Einlaß (4) in den unteren, wandnahen Bereich des Rohrsystems (1) hineinragt.

3. Anordnung nach Anspruch 1 oder 2,
**dadurch gekennzeichnet, daß**
- der Fremdstoff Öl oder eine ölhaltige Substanz ist, wobei die Gasmenge in dem Meßfühler (3) auf eine Temperatur (T) von größer als 50°C aufheizbar ist und eine Auswertung der Ausgangssignale des Detektors (8) unterhalb dieser Temperatur (T) unterbleibt.

4. Anordnung nach einem der Ansprüche 1 bis 3,
**dadurch gekennzeichnet, daß**
- der jeweilige Auslaß (5) des mindestens einen Meßfühlers (3) in Richtung des Gasstromes (2) derart abgewinkelt ist, daß sich an der in Richtung des wegströmenden Gases befindlichen Öffnung des Auslasses (5) ein Unterdruck und dadurch bedingtes Ansaugen der Gasmenge einstellt.

5. Anordnung nach einem der Ansprüche 1 bis 4,
**dadurch gekennzeichnet, daß**
- die Meßfühler (3), der Detektor (8) und der Temperaturfühler (7) gemeinsam als Meßmodul aufgebaut ist, das in vorbereitete Öffnungen in das den Gasstrom leitende Rohrsystem (1) einschraubbar und über steckbare Signalleitungen (10) mit der Auswerteeinheit (9) verbindbar ist.

6. Anordnung nach einem der Ansprüche 1 bis 5,
**dadurch gekennzeichnet, daß**
- der Detektor (8) ein Halbleitergassensor ist, mit einer katalytischen Oxidation und entsprechender Änderung des elektrischen Widerstandes in Abhängigkeit von den Fremdstoffanteilen.

7. Anordnung nach einem der Ansprüche 1 bis 5,
**dadurch gekennzeichnet, daß**
- der Detektor (8) ein Zinnoxydsensor ist, mit einer katalytischen Oxidation und entsprechender Änderung des elektrischen Widerstandes in Abhängigkeit von den Fremdstoffanteilen.

8. Anordnung nach einem der Ansprüche 1 bis 5,
**dadurch gekennzeichnet, daß**
- der Detektor (8) ein Quarzsensor oder ein Piezokeramiksensor als Bestandteil eines elektrischen Schwingkreises ist, der durch den Fremdstoffanteil verstimmt wird, bzw. die Güte des Sensorschwingkreises in Abhängigkeit vom Fremdstoffanteil variiert.

9. Anordnung nach einem der Ansprüche 1 bis 8,
**dadurch gekennzeichnet, daß**
- die Auswerteeinheit (9) ein Anzeigesystem (15,16) für die Überschreitung von mindestens einem vorgegebenen Grenzwert aufweist.

10. Anordnung nach einem der Ansprüche 1 bis 9,
**dadurch gekennzeichnet, daß**
- die Auswerteeinheit (9) einen Mikroprozessor (14) enthält, der derart programmierbar ist, daß die Ermittlung der Fremdstoffanteile in vorgegebenen Betriebszuständen des den Gasstrom, vorzugsweise Druckluft in Druckluftversorgungsnetzen, führenden Systems erfolgt.

11. Anordnung nach Anspruch 10,
**dadurch gekennzeichnet, daß**
- in einer ersten Meßphase (Phase 1) das System ohne Auswertung des Sensorausgangssignals gestartet wird,
- in einer zweiten Meßphase (Phase 2) bei der Betriebstemperatur des Systems die Auswertung vorgenommen wird und
- in einer dritten Meßphase (Phase 3) die Auswertung mit einer Speicherung der zuletzt ermittelten Werte unterbleibt.
